# EUROPEAN PATENT SPECIFICATION

(11) **EP 3 554 776 B1**
(45) Date of publication and mention of the grant of the patent: **14.04.2021**
(21) Application number: 16820194.5
(22) Date of filing: 13.12.2016
(51) Int. Cl.: B25J 15/10, B25J 15/12, B25J 19/00

(54) **A ROBOT GRIPPER AND AN INDUSTRIAL ROBOT**
ROBOTERGREIFER UND INDUSTRIEROBOTER
PRÉHENSEUR ROBOTIQUE ET ROBOT INDUSTRIEL

(43) Date of publication of application: 23.10.2019
(73) Proprietor: ABB Schweiz AG, 5400 Baden (CH)
(72) Inventor: SIRKETT, Daniel, 749 71 Fjaerdhundra (SE)
(74) Representative: Kransell & Wennborg KB
(86) International application number: PCT/EP2016/080857
(87) International publication number: WO 2018/108255

(56) References cited:
- JP-A- H0 852 679
- JP-U- S6 215 483
- US-A- 2 236 761
- US-A- 3 850 286
- US-A1- 2006 032 192

## Description

### Field of the invention

The present invention relates to a robot gripper configured to be a part of, or to be attached to, an industrial robot in order to enable the industrial robot to grasp objects. The present invention further relates to an industrial robot.

### Background of the invention

Gripping and holding of objects are key tasks for robots. Different tasks impose different requirements on the robot gripper. A precision robot gripper is designed to pick a single object in a specific orientation. The precision robot gripper is customized to the objects concerned through the use of customized fingers. By contrast, a universal robot gripper should be able to pick up unfamiliar objects of arbitrary shape, size, and surface properties, and varying orientation. Ideally, the universal gripper should be generic.

Picking of small parts supplied unordered in containers or bins is a challenge within a robotized assembly operation. There exist parts feeders comprising means for reducing a difficult 3D bin-picking task to a more manageable 2D vision problem, but such solutions are bulky, complex and expensive compared to the manual bin-picking systems they replace. True 3D bin-picking systems, which allow the robot to pick parts directly from a container are available, but their efficacy is dependent on the complexity of the parts to be picked, and system costs are high. In order to pick the parts directly from the container, a suitable universal robot gripper is needed.

The development of universal robot grippers able to pick up unfamiliar objects of widely varying shapes remains challenging. Most current designs are based on a multifingered hand having a number of controllable joints. A disadvantage of the multifingered hand is that the control of the joints requires sensor feedback and introduces hardware and software complexities. Another example of a universal robot gripper is a jamming gripper, in which individual fingers are replaced by a single mass of granular material that, when pressed onto a target object, flows around it and conforms to the shape of the object. Upon application of a vacuum, the granular material contracts and hardens quickly to pinch and hold the object without requiring sensory feedback. However, the jamming gripper suffers from at least two disadvantages. Firstly, in original form the jamming gripper has been shown to have a poor lifetime due to failure of an outer skin. Secondly, the jamming gripper is bulky and may hinder access in confined spaces.

A more general concern is the working range of the robot, which may be insufficient to allow the universal robot gripper to reach objects at the bottom of a container, thereby necessitating more frequent refilling of objects. Several robot grippers have been developed to extend the working range of the robot using a telescopic arm.

US 5,421,697 discloses a telescopic apparatus, whereby a slider plate is telescopically moved in relation to a base plate. A non-retractable gripping member is positioned on an end of the slider plate. Gears are used for movement of the slider plate.

US 3,819,061 discloses a robot for transfer of articles. A telescopic arm is electrically or hydraulically moved. Two pneumatic cylinders for movements of the arm are mounted on the arm. A non-retractable robot gripper is positioned at the end of the arm.

US 3,773,189 discloses a robot device having a pneumatically driven telescopic arm comprising an inner cylinder, an outer cylinder arranged movable in relation to the inner cylinder, and a gripping member including two gripping fingers. The fingers are rotatable about two joints between an open and a closed position. The opening and closing of the fingers are effected by a linear movements of a tapered member adapted to enter a gap between the fingers to cause them to pivot around the joints, thus opening or closing the fingers. The movement of the tapered member is effected through movements of a piston disposed in the outer cylinder and attached to the tapered member and a loaded spring. The piston is moved by charging compressed air to the outer cylinder and by discharging the compressed air from the outer cylinder. For providing air pressure, the arm is divided into several air chambers. The device has a rather complex arm and gripper mechanism. The arm is bulky with many parts, which makes the arm heavy.

US 2,320,967 discloses a mechanical finger gripping device. The gripping device comprises a tubular supporting member, a rod mounted for reciprocal movement in the tubular supporting member, and a pair of gripper jaws pivotally attached to the rod. The rod is mounted in a tubular supporting member and reciprocally moved within this supporting member. The jaws of the gripping member project beyond the supporting member and comprise an arched portion that merge into a flattened area forming angled seats adapted to hold an object.

US 3,850,286 discloses a seed selector comprising a vertical cylinder blocked at both its upper and lower ends with a central opening on its lower end which flares outwardly in the downward direction. A piston in the cylinder has secured to its lower end three spring wire fingers that extend out through the central opening and spread apart therebelow, each finger having an inwardly hooked end. When fluid pressure is applied, typically as a vacuum to the upper end of the piston, the piston is raised upwardly and the fingers are moved upwardly while the hooked ends move inwardly so that they can seize between them a seed and lift the seed. The device is then moved to another position and the seed is dropped by bleeding the vacuum to atmosphere so that the piston drops to its lowest position and the fingers open.

US 2006/032192 discloses a transport device comprising an actuator, a body coupled to the actuator having an abutment surface, and a plurality of arms coupled to the actuator that selectively extend from and retract into the body. The arms are spring loaded when within the body, and the arms provide a support surface for an item when extended outside the body.

JP H08-052679 discloses a transfer device for microstructure articles which is equipped with resilient claws which extend outward when slid out of a cylindrical sleeve.

US 2,236,761 discloses a well fishing tool for recovering small articles, such as drill bit cones, from the bottom of deep wells.

JP S62-15483 U depicts a gripping device with three movable claws.

### Summary of the invention

It is an object of the present invention to provide an improved robot gripper, which at least partly overcomes the above mentioned problems.

This object is achieved by a robot gripper as defined in claim 1.

In an example, the robot gripper comprises a first tubular part, and a gripping member comprises a movable part arranged linearly movable inside the first tubular part, and grip claws adapted to be opened and closed by means of the movements of the movable part. The grip claws are rigidly connected to the movable part and by that linearly movable in relation to the first tubular part between a retracted position and an extended position, and the grip claws are resilient and adapted to be opened in the extended position and closed in the retracted position.

In an example, the grip claws are at least partly withdrawn into the first tubular part when the grip claws are in the retracted position, and the grip claws protrude from the first tubular part when they are in the extended position. Thus, the grip claws are hidden in the first tubular part when the robot gripper is not used. Further, the grip claws are partly retracted in the first tubular part when an object has been gripped, and during moving of the object. By using collapsible grip claws, the bulkiness of the prior art robot grippers is overcome. The robot gripper according to the invention is compact when it is not used.

According to an embodiment of the invention, the grip claws are resilient. Due to the fact that the grip claws are resilient, they can be collapsed when they are withdrawn inside the first tubular part and deployed when they are protruding from the first tubular part. This mechanism for opening and closing the grip claws is simple, and further the number of parts needed is reduced compared to the prior art.

The robot gripper comprises only a few parts. This reduces the complexity of the robot gripper as well as its weight. The robot gripper is robust and able to withstand wear and tear.

According to an embodiment of the invention, each of the grip claws comprises a resilient element that bends outwards from a central axis of the gripping member and has one end attached to the movable part and the other end folded inwards towards the central axis of the gripping member and forming an angled seat adapted to hold an object. Preferably, the resilient elements are elongated. This type of grip claw is very well suited for picking objects of varying size and shape.

According to an embodiment of the invention, the gripping member comprises at least three grip claws, and preferably at least four grip claws. By increasing the number of grip claws the ability to pick objects of varying size and shape is increased.

According to an embodiment of the invention, the at least a main part of the grip claws are withdrawn inside the first tubular part when the grip claws are in the retracted position. The retraction of the grip claws inside the first tubular part reduces the risk for damage to the grip claws when they are not used, and thus increases the life time of the robot gripper. This embodiment also reduces the length of the robot gripper when the gripping member is not used. This is, for example, advantageous when the robot is moving without any gripped object.

According to an embodiment of the invention, the robot gripper comprises a compression spring acting on the movable part and the compression spring is arranged so that it is compressed when the grip claws are in the extended position, and released when the grip claws are in a retracted position. The compression spring is, for example, disposed between the movable part and the first tubular part. An outer end of the first tubular part has an opening for receiving the grip claws. When the spring is compressed, the grip claws emerge from the opening of the first tubular part and flex outwards allowing the grip claws to grasp an object. The spring urges the movable part in a direction away from the opening, and accordingly urges the grip claws towards the retracted position when it is compressed. Thus, the moveable part is driven by the spring to the retracted position. This is a simple mechanism for retracting the grip claws.

According to the invention, the robot gripper comprises a telescopic arm comprising a second tubular part, and the first tubular part is arranged linearly movable inside the second tubular part. The use of a telescopic arm in combination of the extendable grip claws increases the working range of the robot thereby allowing the grip claws to reach objects at the bottom of a container. Thus, the size of the robot gripper when it is not used is further reduced. This results in an extremely compact lightweight robot gripper that may be borne on an outside of a robot hand without adding significant bulk. Further, costs are reduced since complex flexible parts feeders can be replaced with simpler containers. This embodiment provides a compact robot gripper, which is less bulky than the known robot grippers, and allows working in confined spaces. As a consequence, a faster parts replenishment and changeover can be accomplished as empty containers can simply be exchanged with full containers, without the need to empty and refill a static parts tank. This saves time and costs.

According to an embodiment of the invention, the robot gripper is adapted to extend and retract the telescopic arm by means of compressed air and vacuum, and to actuate the linear movements of the movable part at least in part by means of compressed air. The gripping can then be actuated using an existing pneumatic module on the robot, and thus no additional sensors, power-supply, or actuators are needed. The telescopic arm is adapted to be extended by means of compressed air, and to be retracted by means of vacuum. The telescopic arm can be adapted to be totally collapsed by means of vacuum.

According to an embodiment of the invention the robot gripper is adapted to actuate the linear movements of the movable part by means of compressed air in combination with the compression spring. The grip claws are extended by means of compressed air acting on the movable part in one direction, and the grip claws are retracted by means of the compression spring acting on the movable part in an opposite direction.

According to an embodiment of the invention, the telescopic arm has one chamber defined by walls of the telescopic arm, and the chamber comprises at least one opening for receiving compressed air and thereby increasing the pressure in the chamber, and for releasing air from the chamber thereby reducing the pressure in the chamber. The movements of the first tubular part and the movements of the movable part are actuated due to pressure changes inside the chamber. The robot gripper comprises one single air-chamber inside the telescopic arm, and the movable part as well as the telescopic arm are actuated by means of pressure changes in the same chamber. The telescopic and the gripping member are moved to the extended positions using compressed air inside said one chamber. The telescopic arm is collapsed, i.e. fully retracted, using vacuum inside the chamber. This design reduces the complexity of the robot gripper, and also allows for improved cycle times.

According to an embodiment of the invention, the robot gripper comprises a sealing member arranged to form a sliding seal between the first tubular part and the second tubular part, and the compression spring is designed so that the force required to compress the spring is larger than the force required to overcome the friction in the sliding seal. The telescopic arm can then be extended and retracted by changing the pressure in the chamber with compressed air and vacuum respectively. Upon full extension of the telescopic arm, the grip claws can be moved between the extended and retracted position by further increasing the pressure in the chamber by adding more compressed air, and reducing the pressure in the chamber by releasing compressed air from the chamber. Thus, the extension and retraction of the telescopic arm and the extension and retraction of the grip claws can be controlled having only one single chamber by changing the pressure in the chamber.

According to an embodiment of the invention, the movable part is movable between a first position and a second position inside the first tubular part to effect the linear movement, and the movable part is adapted to be moved to the second position in response to compressed air entering into said one chamber thereby causing the grip claws to be moved to the extended position and by that causing opening of the grip claws, and the movable part is adapted to be moved to the first position by the spring upon removal of air from said one chamber thereby retracting the grip claws and by that causing closing of the grip claws. Thus, the grip claws are moved to the retracted position by the spring, and the grip claws are moved to the extended position by means of compressed air. The grip claws are extended when the movable part is in the first position, and the grip claws are retracted when the movable part is in the second position.

According to an embodiment of the invention, the robot gripper comprises a retraction latch for keeping the movable part in the first position when the grip claws are in the retracted position. To keep the telescopic arm in the fully retracted position, a vacuum must otherwise be continually applied to the robot gripper. This would result in undesirable noise from the vacuum generator in the hand and wastage of compressed air. This embodiment provides a solution to this problem by providing the robot gripper with a mechanism to keep the grip claws fully retracted without requiring constant vacuum. The retraction lash is suitably mounted on the movable part.

According to an embodiment of the invention, the retraction latch comprises a sprung ball mounted on the movable part adapted to roll in an indentation arranged on an inside of a surface of the first tubular part.

According to an embodiment of the invention, said movable part comprises a plunger.

According to an embodiment of the invention, the spring claws are surrounded by a flexible skirt. The flexible skirt is arranged around the end of the gripping member so that the skirt surrounds the grip claws. Preferably, the flexible skirt is conical and is tapering towards the movable part. The flexible skirt prevents the grip claws from collision in the case of accidental deployment while the robot is in motion. The skirt is made of a flexible material. Thus, the skirt will flex out of the way upon contact with objects and will not unduly hinder normal operation when the grip claws are in the fully retracted position.

According to an embodiment of the invention, the seats of the grip claws are coated with a non-rigid material. To avoid the edges of the grip claws from scratching objects, the claws could be coated with a non-rigid material, such as a rubber material.

According to an embodiment of the invention, the telescopic arm comprises a third tubular part, the second tubular part is arranged linearly movable inside the third tubular part, and the chamber is defined by said three tubular parts. Further, the chamber is defined by the movable part. The size of the chamber varies in dependence on the amount of air inside the chamber.

According to an embodiment of the invention, an upper end of the telescopic arm opposite the gripping member contains one inlet for passage of air in and out the chamber.

The object is also achieved by an industrial robot comprising a robot gripper according to the invention.

According to an embodiment of the invention, the robot comprises a robot hand equipped with an outlet port for compressed air and vacuum, the robot is capable of switching between blowing out compressed air and applying a vacuum via the outlet port, and the robot gripper is mounted on the robot hand and connected to the outlet port of the robot hand. This embodiment makes it possible to use an existing an outlet port for compressed air and vacuum on the robot hand to retract and extend the robot gripper.

### Brief description of the drawings

The invention will now be explained more closely by the description of different embodiments of the invention and with reference to the appended figures.
Fig. 1 shows a perspective view of a robot gripper according to an embodiment of the invention in a fully extended state.
Fig. 2 shows a perspective view of the robot gripper in figure 1 in a fully retracted state.
Fig. 3 shows a cross-section A-A through the robot gripper shown in figure 2 in the fully retracted state.
Fig. 4 shows a cross-section B-B through the robot gripper shown in figure 2 in the fully retracted state.
Fig. 5 shows an enlarged view of a cross section through a lower part of the robot gripper shown in figure 1 and 2.
Fig. 6a shows a cross-section through the robot gripper shown in figure 1 in the fully extended state.
Figs. 6b-e show cross-sections through the robot gripper shown in figure 1 when the robot gripper is moved between the fully retracted state and the fully extended state.
Figs. 7a-b illustrate the robot gripper gripping and carrying an object.
Figs. 8 and 9 show the robot gripper mounted on a hand of an industrial robot.
Fig. 10 shows the robot gripper provided with a flexible skirt and mounted on a hand of an industrial robot.
Fig. 11 shows an example of a retraction latch.

### Detailed description of preferred embodiments of the invention

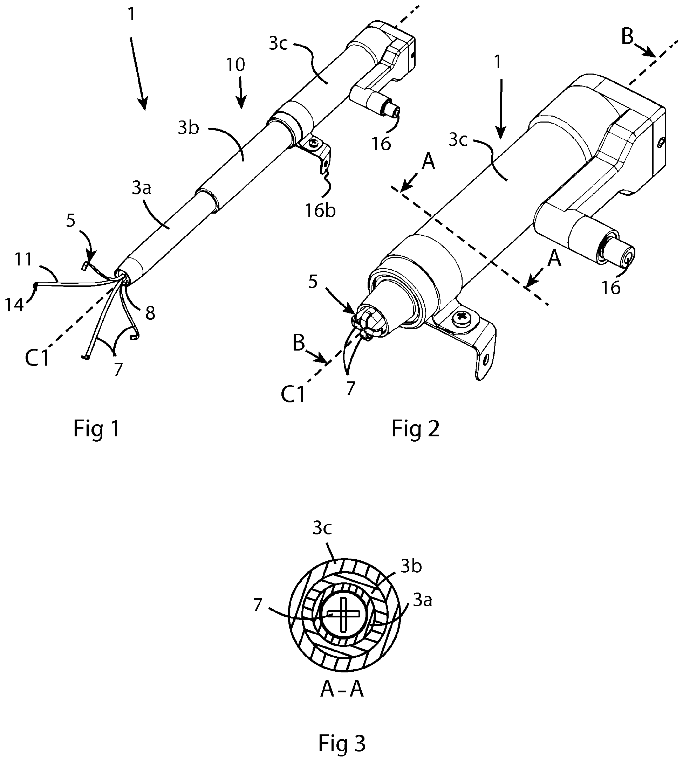

Figure 1 shows a perspective view of a robot gripper 1 for an industrial robot according to an embodiment of the invention in a fully extended state, and figure 2 shows a perspective view of the robot gripper 1 in a fully retracted state. Figure 3 shows a cross-section through the robot gripper 1 in the fully retracted state. The robot gripper comprises a first tubular part 3a and a gripping member 5 comprising plurality of collapsible grip claws 7. An outer end of the first tubular part 3a has an opening 8 for receiving the grip claws 7. The gripping member 5 is arranged linearly movable along a centre axis C1 aligned with a longitudinal axis of the first tubular part 3a so that the grip claws 7 are moved between an extended position and a retracted position. In the extended position, the grip claws emerge from the opening 8 of the first tubular part and flex outwards thereby allowing the grip claws to grasp an object. The diameter of the grasp is about 40-50 mm depending on the actuation stroke and claw geometry.

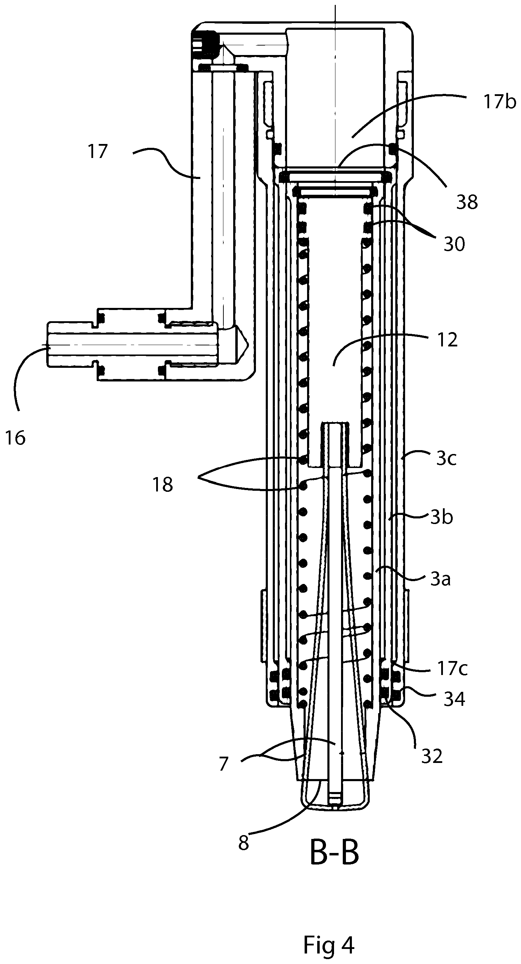

When the grip claws are moved towards the retracted position, the grip claws tights their grip on the object. The grip claws 7 are adapted to close when the gripping member is moved to the retracted positon, as shown in figure 2, and to open when the gripping member is moved to the extended position, as shown in figure 1. The grip claws 7 have a side facing the centre axis C1, and each of the grip claws is disposed at about the same distance from the centre axis C1. The grip claws close when the grip claws move towards the centre axis C1 and open when the grip claws move away from the centre axis C1. In this embodiment the gripping member comprises four grip claws 7. However, the number of grip claws may vary. In this embodiment, each of the grip claws 7 comprises an elongated and resilient element 11 that is bent outwards from the central axis C1 of the gripping member and has one end attached to a movable part 12 arranged inside the first tubular part 3a, as show in figure 4, and the other end folded inwards in a direction towards the central axis C1 and forming angled seats 14 for gripping an object. The grip claws are suitably made of metal, such as spring steel. The sharp edges of the grip claws could scratch objects being gripped. To avoid this, the grip claws could be coated in a rubber material, or they could be made from a stiff polymer rather than spring steel.

In this embodiment of the invention, the robot gripper 1 comprises a telescopic arm 10 including a plurality of tubular parts 3a-c. The telescopic arm 10 comprises a first tubular part 3a and a second tubular part 3b, and the first tubular part 3a is arranged linearly movable inside the second tubular part 3b. The telescopic arm further comprises a third tubular part 3c, and the second tubular part 3b is arranged linearly movable inside the third tubular part 3c. In this embodiment, the telescopic arm comprises three tubular parts. However, the telescopic arm may comprise more than three or fewer than three tubular parts. The first tubular part 3a is movably connected to the second tubular part 3b, and the second tubular part 3b is movably connected to the third tubular part 3c. The gripping member 5 is movable inside the first tubular part 3a in parallel with the centre axis C1.The first tubular part 3a is movable inside the second tubular part 3b in parallel with the centre axis C1. The second tubular part 3b is movable inside the third tubular part 3c in parallel with the centre axis C1. The second tubular part is adapted to move inside the third tubular part parallel to the centre axis C1. This allows the telescopic arm to be moved between an extended position, as shown in figure 1, and a retracted position as shown in figure 2.

The grip claws 7 are arranged movable in relation to the telescopic arm between an extended and a retracted position so that the grip claws extend outside the telescopic arm in the extended position, as shown in figure 1, and the grip claws are at least partly withdrawn inside the telescopic arm in the retracted position, as shown in figure 2. When the robot gripper 1 is in the fully extended state, the telescopic arm 10 and the grip claws 7 are in their extended positions, as shown in figure 1, and when the robot gripper 1 is in the fully retracted state, the telescopic arm 10 and the grip claws 7 are in their retracted positions, as shown in figure 2. At least a major part of the grip claws 7 is inside the first tubular part 3a, at least a major part of the first tubular part 3a is inside the second tubular part 3b, and at least a major part of the second tubular part 3b is inside the third tubular part 3c in the retraced position, as shown in figures 2 and 4.

An upper end of the telescopic arm 10 opposite the gripping member 5 contains one inlet connector 16 defining an inlet for passage of air in and out of the telescopic arm 10. A mounting 16b is provided at a lower end of the first tubular part 3c for stabilizing the attachment of the gripper to the outside of a robot hand.

Figure 4 shows a cross-section B-B through the robot gripper 1 in the fully retracted state. The gripping member 5 further comprises a movable part 12 attached to the grip claws 7. The movable part 12 is arranged linearly movable inside the first tubular part 3a. The grip claws 7 are rigidly connected to the movable part 12 and accordingly the grip claws 7 are linearly movable in relation to the first tubular part 3a and the opening 8. The movable part 12 can be designed as a plunger. Compressed air is led from the inlet connector 16, via a support arm 17 and a threaded connector 17b, to an opening 38 in the upper end of the third tubular part 3c. The second tubular part 3b is free to slide within the third tubular part 3c, and its travel is limited by the threaded connector 17b at the top and by a chamfered surface 17c of the third tubular part 3a. A sealing member 34 in the form of a pair of O-rings forms a sliding seal between the second and third tubular parts 3b-c. Similarly, the first tubular part 3a slides within the second tubular part 3b. The movable part 12 is located inside the first tubular part 3a. The first tubular part 3a is also equipped with a sealing member 30 in the form of a pair of O-rings forming a sliding seal against the inside of the first tubular part 3a.

In this embodiment, the robot gripper 1 comprises a compression spring 18 disposed between the movable part 12 and the first tubular part 3a. The compression spring 18 is arranged so that it is compressed when the grip claws are in the extended position, and released when the grip claws are in the retracted position. The compression spring 18 urges the movable part 12 in a direction away from the opening 8, and accordingly forces the grip claws towards the retracted position. When the compression spring 18 is compressed, the grip claws 7 emerge from the opening 8 of the first tubular part, as shown in figure 1. In the absence of compressed air inside the telescopic arm 10, the movable part 12 is pushed upwards by the compression spring 18, thus drawing the grip claws 7 upwards into the first tubular part 3a.

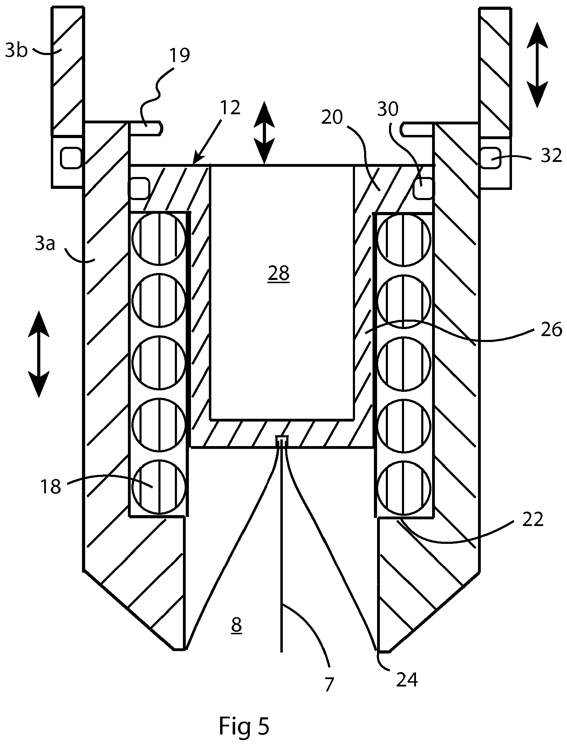

Figure 5 shows a schematic cross-section through a lower part of the robot gripper. The movable part 12 is arranged linearly movable in relation to the first tubular part 3a in a direction parallel to the central axis C1. Thus, the movable part 12 enables the grip claws 7 to move between the retracted and the extended positions. The movable part 12 is adapted to be moved between a first position and a second position inside the first tubular part 3a. When the movable part 12 is in the first position, the grip claws are in the retracted position, and when the movable part is in the second position, the grip claws are in the extended position. The first tubular part 3a is provided with stop element 19 arranged in an upper end of the first tubular part 3a to prevent the movable part 12 from entering into the second tubular part 3b. The stop element 19 is, for example, a circlip secured into a groove on the upper end of the first tubular part 3a.

In the view of figure 5, the movable part 12 is in an intermediate position between the first and second positions, and accordingly the grip claws 7 are in an intermediate position between the extended position and the retracted position. A lower end of the first tubular part 3a has an edge 24 surrounding the opening 8. The grip claws 7 are in contact with the edge 24 in the intermediate position and by that the resilient grip claws 7 are forced towards the centre axis C1 and the grip claws are collapsed when the grip claws are moved to the retracted position.

The compression spring 18 is disposed inside of the first tubular part 3a between an inner wall of first tubular part 3a and the movable part 12. An upper end of the movable part 12 is provided with a flange 20, and a lower portion of the first tubular part is provided with protruding part forming a shoulder 22, and the compression spring is arranged between the flange 20 and the shoulder 22. When the compression spring is compressed, the spring exerts a force on the flange and by that a force on the movable part 12 in a direction away from the opening 8. The compression spring is adapted to push up the movable part 12 towards the first position by exerting a force on the flange 20. The robot gripper is adapted to move the tubular parts 3a-c between the extended and retracted positions by means of compressed air and vacuum, and to actuate the linear movements of the movable part by means of compressed air and the compression spring 18. The movable part 12 is adapted to be moved to the second position in response to compressed air entering into the telescopic arm, and to be moved to the first position due to the force from the compression spring 18 and in absence of compressed air in the telescopic arm.

The movable part 12 comprises a tubular portion 26 having a bottom part and defining a space 28. The space 28 has an opening facing the interior of the second tubular part 3b. The compression spring 18 is surrounding the tubular portion 26. The flange 20 of the movable part is designed to fit in a space defined by the first tubular part 3a. The flange 20 is provided with a first sealing member 30 arranged to form a sliding seal between the movable part 12 and the first tubular part 3a. The robot gripper 1 further comprises a second sealing member 32 arranged to form a sliding seal between the first and second tubular parts 3a-b. A third sealing member 34 is arranged between the second and third tubular parts 3b-c to form a sliding seal, as shown in figure 4. The compression spring 18 is designed so that the force required to compress the compression spring 18 is larger than the force required to overcome the friction in the sliding seal formed by the sealing members 30, 32, 34. In this embodiment, each of the first, second, and third sealing members 30, 32, 34 comprises one or more of O-ring seals. In this embodiment the sealing members are arranged in lower parts of the second and third tubular parts 3b-c, and an upper part of the movable part 12, as shown in figure 4.

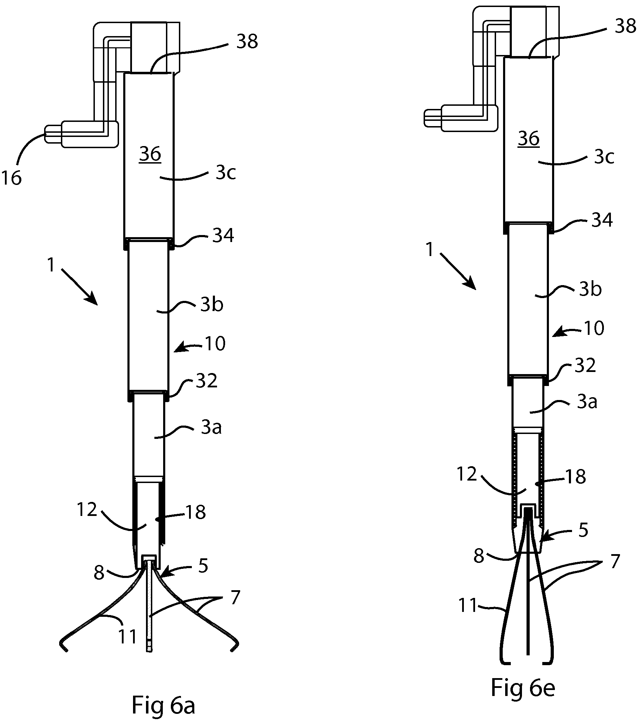

Figure 6a shows a cross-section through the robot gripper in the fully extended state. As seen from the figure, the telescopic arm 10 and the grip claws 7 are in their extended positions, and the grip claws are opened in the fully extended state. The telescopic arm 10 comprises a chamber 36 defined by walls of the telescopic arm. The chamber 36 is defined by the tubular parts 3a-c and the movable part 12. The size of the chamber 36 varies in dependence on the state of the robot gripper, i.e. whether the robot gripper is in the extended state, the retracted state or in between the extended and retracted states. The more extended robot gripper is, the larger is the chamber 36. Together, the tubular parts 3a-c, the movable part 12, and the sealing members 30, 32, 34 form an airtight space, which defines the chamber 36. The sealing members 30, 32, 34 are arranged to form sliding seals between the moving parts to prevent air from entering or leaving the chamber through potential gaps between the tubular parts 3a-c, and the movable part 12. The chamber 36 comprises at least one opening 38 for receiving compressed air to increase the pressure inside the chamber and for releasing air from the chamber to reduce the pressure inside the chamber. The movements of the first and second tubular parts 3a-b, and accordingly the extension and retraction of the telescopic arm, are actuated due to pressure changes inside the chamber 36. Further, the movements of the movable part 12 are also actuated due to pressure changes inside the chamber 36.

In figure 6a the pressure inside the chamber 36 is over atmospheric pressure. The movable part 12 is moved to the second position in response to compressed air entering into the telescopic arm. The pressure inside the telescopic arm keeps the telescopic arm in the extended position and exerts a force on the movable part 12 towards the opening 8 of the first tubular part 3a causing compression of the compression spring 18 and keeping the movable part 12 in the second position. The grip claws 7 are in the extended position and due to the fact that the elongated elements 11 are resilient and bent outwards from the central axis C1, the grip claws 7 are opened when the grip claws are in the extended position.

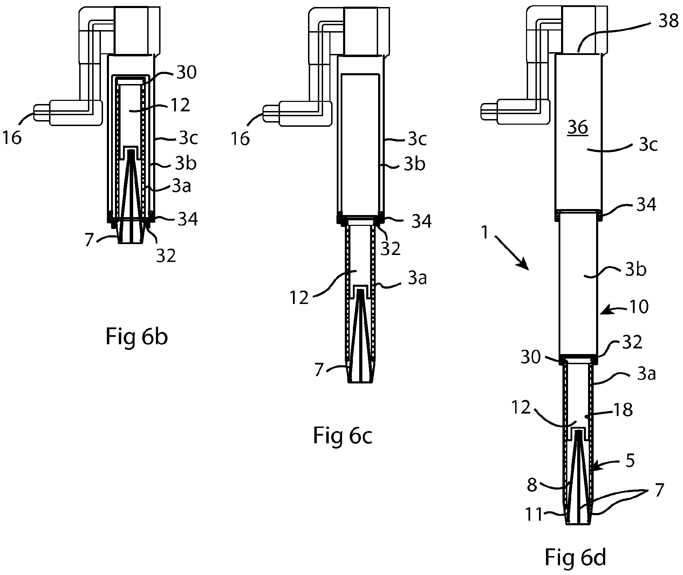

Figures 6a-e illustrate how the robot gripper is moved between the fully extended state as shown in figure 6a and the fully retracted state, as shown in figure 6b. Since the tubular parts 3a-c are movable relative each other, the pressure inside the telescoping arm affects the positions of the tubular parts relative each other. In order to extend the telescopic arm 10, as shown in figure 6b - 6d, the pressure inside the chamber should be above the atmospheric pressure. However, to keep the telescopic arm 10 in the extended position with the grip claws 7 in the retracted position, as shown in figure 6d, the pressure inside the chamber can be atmospheric. To achieve full extension of the telescopic arm, further compressed air must be applied to the telescopic arm in order to extend the grip claws, as shown in figures 6e and 6a. By decreasing the pressure inside the chamber 36, the grip claws are retracted. By further decreasing the amount of air inside the chamber so that the pressure goes from atmospheric pressure towards vacuum, the telescopic arm will move to its retracted position, as shown in figures 6c and 6b.

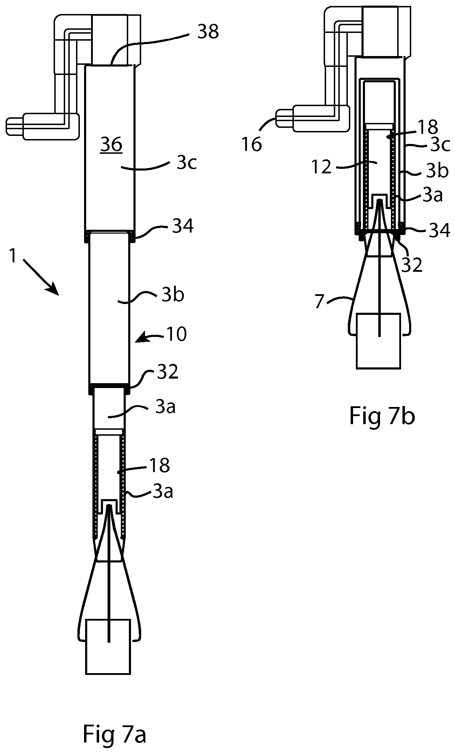

Figures 7a-b illustrate the robot gripper gripping an object and carrying the object. Deployment of the robot gripper is now described with reference to figures 6a- e and figures 7a-b. Figure 6b shows the robot gripper in the fully retracted state. Compressed air is supplied to the inlet connector 16. As the compressed air enters the robot gripper, the telescopic arm begins to extend, as shown in figure 6c. During extension of the telescopic arm, the movable part 12 is in the first position, and accordingly the grip claws 7 remain retracted inside the first tubular part 3a, due to the fact that the force required to compress the compression spring 18 is higher than the force required to overcome the friction in the sealing members 30 and 32. The retraction of the movable part 12 that is caused by the compression spring is overcome by increasing the pressure inside the telescopic arm. Once the first and second tubular parts 3a-b have reached the limits of their travel, as shown in figure 6d, and further compressed air is supplied to the robot gripper, the pressure inside the chamber 36 increases and a force begins to be exerted on the movable part 12, which causes the compression spring 18 to be compressed. Due to the force, the movable part is moved towards the second position and the grip claws are moved out of the first tubular part 3a to the extended position, as show in figure 6e. When the spring 18 is fully compressed, the movable part 12 is in the second position, and the device attains an equilibrium state with the grip claws 7 fully open, as shown in figure 6a.

To retract the robot gripper, the compressed air is switched to vacuum. In the absence of compressed air, the movable part 12 is pushed upwards by the compression spring 18, thus drawing the grip claws upwards into the first tubular part 3a, as shown in figure 6e and 6d. The grip claws 7 are retracted into the first tubular part 3a while the telescopic arm remains fully extended, as shown in figure 6d. At this point, one or more objects can be gripped within the closed grip claws, preventing further upward movement of the movable part, as shown in figure 7a. Further application of vacuum then causes the telescopic arm to collapse until the first and second tubular parts 3a-b have reached their uppermost stop positions, as shown in figure 7b. At this point, one or more objects are held by the grip claws without the robot gripper being fully retracted.

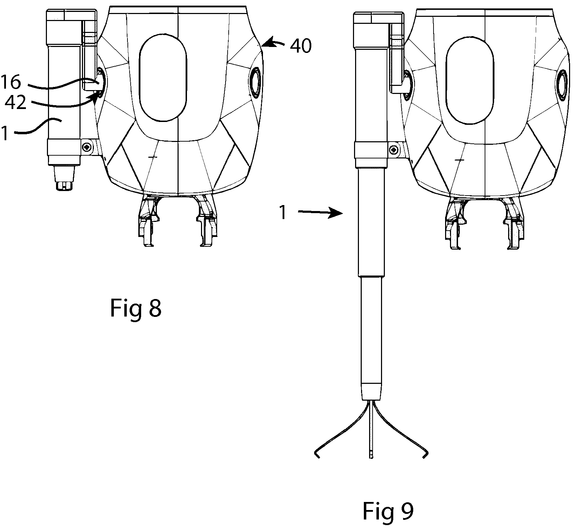

Figures 8 and 9 show the robot gripper 1 mounted on a robot hand 40. The robot hand 40 is equipped with an outlet port 42 for compressed air and possibly also for vacuum, and the robot is provided with means for supplying compressed air and vacuum to the outlet port 42. The robot gripper 1 is installed onto the outlet port 42 on one side of the robot hand 40. The outlet port 42 is capable of switching between blowing out compressed air and applying a vacuum. Switching between vacuum and compressed air is performed by solenoid valves inside the robot hand 40, which are addressable via a robot control program. The inlet connector 16 of the robot gripper is connected to the outlet port 42.

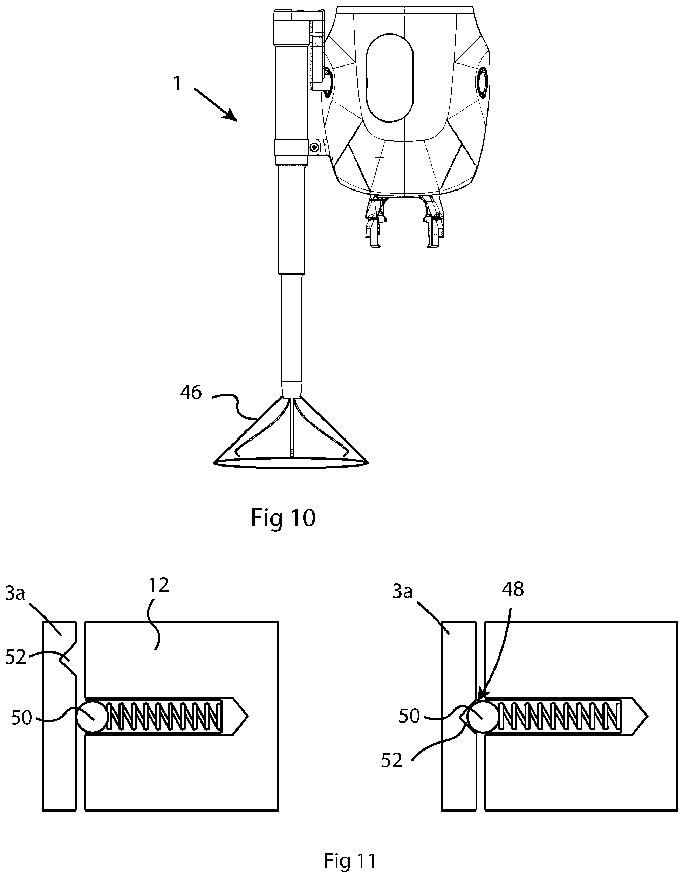

Fig. 10 shows the robot gripper according to another embodiment provided with a flexible skirt 46. To guard against the risk of the grip claws colliding with a human in the case of accidental deployment while the robot is in motion, a flexible skirt 46 could be placed around the end of the robot gripper to surround the grip claws. The flexible skirt is conical and tapers towards the telescopic arm. The skirt is made of a flexible material, such as a flexible plastic or foam-rubber material. Due to the flexible material, the skirt will flex out of the way upon contact with objects and will not unduly hinder normal operation when the grip claws are in the fully retracted position.

In one embodiment, a vacuum is continually applied to the robot gripper to keep the telescopic arm in the retracted position. This may result in undesirable noise from the vacuum generator and wastage of energy. A solution to this problem is to equip the movable part with a retraction latch to keep the grip claws fully retracted without requiring constant vacuum. Figure 11 shows an example of a suitable retraction latch 48. The retraction latch 48 comprises a sprung ball 50 mounted on the movable part 12 and adapted to roll in an indentation 52 arranged on an inside of a surface of the first tubular part 3a. The retraction latch is used to lock the grip claws into the fully retracted position. Alternatively, a tension spring can be used to keep the telescopic arm retracted.

The present invention is not limited to the embodiments disclosed but may be varied and modified within the scope of the following claims. For example, the number of grip claws can be varied, and the number of tubular parts in the telescopic arm can be varied. Further, the shape of the grip claws can be varied. In an alternative embodiment, a tension spring can be used instead of vacuum to retract the telescopic arm and to keep the telescopic arm in the retracted position.

## Claims

1. A robot gripper comprising a first tubular part (3a), and a gripping member (5) comprising a movable part (12) arranged linearly movable inside the first tubular part, and grip claws (7) adapted to be opened and closed by means of linear movements of the movable part, wherein the grip claws (7) are rigidly connected to the movable part (12) and thereby are linearly movable in relation to the first tubular part (3a) between a retracted position and an extended position, and the grip claws are adapted to be opened in the extended position and closed in the retracted position, **characterized by** a telescopic arm (10) comprising the first tubular part (3a) and a second tubular part (3b), wherein the first tubular part (3a) is arranged linearly movable inside the second tubular part (3b).

2. The robot gripper according to claim 1, wherein the grip claws (7) at least partly are resilient.

3. The robot gripper according to claim 1 or 2, wherein each of the grip claws (7) comprises an elongated and resilient element (11) that is bend outwards from a central axis (C1) of the gripping member (5) and has one end attached to the movable part (12) and the other end is folded inwards towards the central axis (C1) of the gripping member (5) and forming an angled seat (14).

4. The robot gripper according to any of the previous claims, wherein the gripping member (5) comprises at least three grip claws (7), and preferably at least four grip claws (7).

5. The robot gripper according to any of the previous claims, wherein at least a main part of the grip claws (7) is adapted to be retracted inside the first tubular part (3a) when the grip claws (7) are in the retracted position.

6. The robot gripper according to any of the previous claims, wherein the robot gripper (1) comprises a compression spring (18) acting on the movable part (12) and the compression spring (18) is arranged so that it is compressed when the grip claws (7) are in the extended position, and released when the grip claws (7) are in the retracted position.

7. The robot gripper according to any of the preceding claims, wherein the robot gripper (1) is adapted to extend and retract the telescopic arm (10) by means of compressed air and vacuum, and to actuate the linear movements of the movable part (12) at least in part by means of compressed air.

8. The robot gripper according to claim 6, wherein the robot gripper (1) comprises a sealing member (32) arranged to form a sliding seal between the first tubular part (3a) and the second tubular part (3b), and the force required to compress the compression spring (18) is larger than the force required to overcome the friction in the sliding seal.

9. The robot gripper according to any of the preceding claims, wherein the telescopic arm (10) has a chamber (36) defined by said tubular parts (3a-b) of the telescopic arm (10), the chamber (36) comprises at least one opening (38) for receiving compressed air to increase the pressure inside the chamber (36) and for releasing air from the chamber to reduce the pressure inside the chamber, and the extension and retraction of the telescopic arm (10) and the linear movements of the movable part (12) are actuated due to pressure changes inside said chamber (36).

10. The robot gripper according to claim 9, wherein the movable part (12) is adapted to be moved between a first position and a second position inside the first tubular part (3a), the movable part (12) is adapted to be moved to the second position in response to compressed air entering into said chamber (36) thereby causing the grip claws (7) to be moved to the extended position and by that causing opening of the grip claws (7), and the movable part (12) is adapted to be moved to the first position upon removal of air from said chamber (36) thereby retracting the grip claws (7) and by that causing closing of the grip claws (7).

11. The robot gripper according to any of the previous claims, wherein said movable part (12) comprises a plunger.

12. The robot gripper according to any one of the previous claims, wherein the grip claws (7) are surrounded by a flexible skirt (46).

13. An industrial robot comprising a robot gripper (1) according to any of the previous claims.

14. The industrial robot according to claim 13, wherein the robot comprises a robot hand (40) equipped with an outlet port (42) for compressed air and vacuum, the robot is capable of switching between blowing out compressed air and applying a vacuum via the outlet port, and a robot gripper (1) according to claim 7 is mounted on the robot hand and connected to the outlet port (42) of the robot hand.

## Patentansprüche

1. Robotergreifer, umfassend einen ersten rohrförmigen Teil (3a) und ein Greifelement (5), umfassend einen beweglichen Teil (12), der in dem ersten rohrförmigen Teil linear beweglich angeordnet ist, und Greifklauen (7), die ausgelegt sind, mittels linearer Bewegungen des beweglichen Teils geöffnet und geschlossen zu werden, wobei die Greifklauen (7) starr mit dem beweglichen Teil (12) verbunden sind und dadurch in Relation zu dem ersten rohrförmigen Teil (3a) zwischen einer eingefahrenen Position und einer ausgefahrenen Position linear beweglich sind, und wobei die Greifklauen ausgelegt sind, in der ausgefahrenen Position geöffnet und in der eingefahrenen Position geschlossen zu sein, **gekennzeichnet durch** einen Teleskoparm (10), der den ersten rohrförmigen Teil (3a) und einen zweiten rohrförmigen Teil (3b) umfasst, wobei der erste rohrförmige Teil (3a) in dem zweiten rohrförmigen Teil (3b) linear beweglich angeordnet ist.

2. Robotergreifer nach Anspruch 1, wobei die Greifklauen (7) zumindest teilweise elastisch sind.

3. Robotergreifer nach Anspruch 1 oder 2, wobei jede der Greifklauen (7) ein längliches und elastisches Element (11) umfasst, das von einer Mittelachse (C1) des Greifelements (5) nach außen gebogen ist und dessen eines Ende an dem beweglichen Teil (12) angebracht ist und dessen anderes Ende hin zu der Mittelachse (C1) des Greifelements (5) einwärts geklappt ist und einen abgewinkelten Sitz (14) ausbildet.

4. Robotergreifer nach einem der vorhergehenden Ansprüche, wobei das Greifelement (5) mindestens drei Greifklauen (7) und vorzugsweise mindestens vier Greifklauen (7) umfasst.

5. Robotergreifer nach einem der vorhergehenden Ansprüche, wobei zumindest ein Hauptteil der Greifklauen (7) ausgelegt ist, in den ersten rohrförmigen Teil (3a) eingefahren zu sein, wenn sich die Greifklauen (7) in der eingefahrenen Position befinden.

6. Robotergreifer nach einem der vorhergehenden Ansprüche, wobei der Robotergreifer (1) eine Druckfeder (18) umfasst, die auf den beweglichen Teil (12) wirkt, und wobei die Druckfeder (18) derart angeordnet ist, dass sie zusammengedrückt ist, wenn sich die Greifklauen (7) in der ausgefahrenen Position befinden, und gelöst ist, wenn sich die Greifklauen (7) in der eingefahrenen Position befinden.

7. Robotergreifer nach einem der vorhergehenden Ansprüche, wobei der Robotergreifer (1) ausgelegt ist, den Teleskoparm (10) mittels Druckluft und Unterdruck auszufahren und einzufahren, und die linearen Bewegungen des beweglichen Teils (12) zumindest teilweise mittels Druckluft anzutreiben.

8. Robotergreifer nach Anspruch 6, wobei der Robotergreifer (1) ein Dichtungselement (32) umfasst, das angeordnet ist, eine Gleitdichtung zwischen dem ersten rohrförmigen Teil (3a) und dem zweiten rohrförmigen Teil (3b) auszubilden, und wobei die zum Zusammendrücken der Druckfeder (18) erforderliche Kraft größer als die Kraft ist, die zum Überwinden der Reibung in der Gleitdichtung erforderlich ist.

9. Robotergreifer nach einem der vorhergehenden Ansprüche, wobei der Teleskoparm (10) eine Kammer (36) aufweist, die durch die rohrförmigen Teile (3a-b) des Teleskoparms (10) definiert ist, wobei die Kammer (36) mindestens eine Öffnung (38) zum Aufnehmen von Druckluft zum Erhöhen des Drucks in der Kammer (36) und zum Ablassen von Luft aus der Kammer zum Reduzieren des Drucks in der Kammer umfasst, und wobei das Ausfahren und Einfahren des Teleskoparms (10) und die linearen Bewegungen des beweglichen Teils (12) aufgrund von Druckänderungen in der Kammer (36) angetrieben werden.

10. Robotergreifer nach Anspruch 9, wobei der bewegliche Teil (12) ausgelegt ist, zwischen einer ersten Position und einer zweiten Position in dem ersten rohrförmigen Teil (3a) bewegt zu werden, wobei der bewegliche Teil (12) ausgelegt ist, in Reaktion darauf zu der zweiten Position bewegt zu werden, dass Druckluft in die Kammer (36) eintritt, wodurch bewirkt wird, dass die Greifklauen (7) zu der ausgefahrenen Position bewegt werden, und wobei dadurch ein Öffnen der Greifklauen (7) bewirkt wird, und wobei der bewegliche Teil (12) ausgelegt ist, nach Entfernen von Luft aus der Kammer (36) zu der ersten Position bewegt zu werden, wodurch die Greifklauen (7) eingefahren werden, und wobei dadurch ein Schließen der Greifklauen (7) bewirkt wird.

11. Robotergreifer nach einem der vorhergehenden Ansprüche, wobei der bewegliche Teil (12) einen Kolben umfasst.

12. Robotergreifer nach einem der vorhergehenden Ansprüche, wobei die Greifklauen (7) von einer flexiblen Schürze (46) umgeben sind.

13. Industrieroboter, umfassend einen Robotergreifer (1) nach einem der vorhergehenden Ansprüche.

14. Industrieroboter nach Anspruch 13, wobei der Roboter eine Roboterhand (40) umfasst, die mit einer Auslassöffnung (42) für Druckluft und Unterdruck ausgestattet ist, wobei der Roboter zwischen einem Ausblasen von Druckluft und einem Aufbringen eines Unterdrucks über die Auslassöffnung umschaltbar ist, und wobei ein Robotergreifer (1) nach Anspruch 7 an der Roboterhand montiert und mit der Auslassöffnung (42) der Roboterhand verbunden ist.

## Revendications

1. Préhenseur robotique, comprenant une première pièce tubulaire (3a) et un organe préhenseur (5) comprenant une pièce mobile (12) agencée linéairement mobile à l'intérieur de la première pièce tubulaire et des griffes de préhension (7) adaptées à s'ouvrir et se fermer au moyen de mouvements linéaires de la pièce mobile, les griffes de préhension (7) étant solidarisées à la pièce mobile (12) et, de cette manière, linéairement mobiles par rapport à la première pièce tubulaire (3a) entre une position escamotée et une position déployée et les griffes de préhension étant adaptées à s'ouvrir dans la position déployée et se fermer dans la position escamotée, **caractérisé par** un bras télescopique (10) comprenant la première pièce tubulaire (3a) et une deuxième pièce tubulaire (3b), la première pièce tubulaire (3a) étant agencée linéairement mobile à l'intérieur de la deuxième pièce tubulaire (3b).

2. Préhenseur robotique selon la revendication 1, dans lequel les griffes de préhension (7) sont au moins partiellement élastiques.

3. Préhenseur robotique selon la revendication 1 ou 2, dans lequel chacune des griffes de préhension (7) comprend un élément allongé et élastique (11) qui est courbé vers l'extérieur à partir d'un axe central (C1) de l'organe préhenseur (5) et présente une extrémité fixée à la pièce mobile (12) et l'autre extrémité repliée vers l'intérieur en direction de l'axe central (C1) de l'organe préhenseur (5) et formant un siège coudé (14).

4. Préhenseur robotique selon l'une quelconque des revendications précédentes, dans lequel l'organe préhenseur (5) comprend au moins trois griffes de préhension (7), et de préférence au moins quatre griffes de préhension (7).

5. Préhenseur robotique selon l'une quelconque des revendications précédentes, dans lequel au moins une partie principale des griffes de préhension (7) est adaptée à s'escamoter à l'intérieur de la première pièce mobile (3a) lorsque les griffes de préhension (7) occupent la position escamotée.

6. Préhenseur robotique selon l'une quelconque des revendications précédentes, lequel préhenseur robotique (1) comprend un ressort de compression (18) agissant sur la pièce mobile (12) et dans lequel le ressort de compression (18) est agencé de façon à se comprimer lorsque les griffes de préhension (7) occupent la position déployée et se relâcher lorsque les griffes de préhension (7) occupent la position escamotée.

7. Préhenseur robotique selon l'une quelconque des revendications précédentes, lequel préhenseur robotique (1) est adapté à déployer et escamoter le bras télescopique (10) au moyen d'air comprimé et d'une aspiration, et pour effectuer les mouvements linéaires de la pièce mobile (12) au moins en partie au moyen d'air comprimé.

8. Préhenseur robotique selon la revendication 6, lequel préhenseur robotique (1) comprend un organe formant étanchéité (32) agencé de manière à former un joint d'étanchéité glissant entre la première pièce tubulaire (3a) et la deuxième pièce tubulaire (3b), et dans lequel la force nécessaire pour comprimer le ressort de compression (18) est plus grande que la force nécessaire pour vaincre le frottement du joint d'étanchéité glissant.

9. Préhenseur robotique selon l'une quelconque des revendications précédentes, dans lequel le bras télescopique (10) est pourvu d'une chambre (36) définie par lesdites pièces tubulaires (3a-b) du bras télescopique (10), la chambre (36) comprend au moins une ouverture (38) destinée à recevoir de l'air comprimé afin d'accroître la pression à l'intérieur de la chambre (36) et destinée à libérer de l'air de la chambre afin de réduire la pression à l'intérieur de la chambre et le déploiement et l'escamotage du bras télescopique (10) et les mouvements linéaires de la pièce mobile (12) s'effectuent du fait de variations de pression à l'intérieur de ladite chambre (36).

10. Préhenseur robotique selon la revendication 9, dans lequel la pièce mobile (12) est adaptée à se déplacer entre une première position et une deuxième position à l'intérieur de la première pièce tubulaire (3a), la pièce mobile (12) est adaptée à être amenée jusqu'à la deuxième position en réponse à l'entrée d'air comprimé dans ladite chambre (36) en amenant ainsi les griffes de préhension (7) dans la position déployée et, ce faisant, en provoquant l'ouverture des griffes de préhension (7), et la pièce mobile (12) est adaptée à être amenée jusqu'à la première position suite à l'évacuation d'air de ladite chambre (36) en escamotant ainsi les griffes de préhension (7) et, ce faisant, en provoquant la fermeture des griffes de préhension (7).

11. Préhenseur robotique selon l'une quelconque des revendications précédentes, dans lequel ladite pièce mobile (12) comprend un plongeur.

12. Préhenseur robotique selon l'une quelconque des revendications précédentes, dans lequel les griffes de préhension (7) sont entourées d'une jupe souple (46).

13. Robot industriel, comprenant un préhenseur robotique (1) selon l'une quelconque des revendications précédentes.

14. Robot industriel selon la revendication 13, lequel robot comprend une main robotique (40) équipée d'un orifice de sortie (42) pour de l'air comprimé et une aspiration, le robot étant apte à alterner entre la projection d'air comprimé et l'application d'une aspiration par le biais de l'orifice de sortie, et dans lequel un préhenseur robotique (1) selon la revendication 7 est monté sur la main robotique et relié à l'orifice de sortie (42) de la main robotique.
